# EUROPÄISCHE PATENTSCHRIFT

(11) **EP 4 128 131 B1**
(45) Veröffentlichungstag und Bekanntmachung des Hinweises auf die Patenterteilung: **27.05.2026**
(21) Anmeldenummer: 21716992.9
(22) Anmeldetag: 30.03.2021
(51) Int. Cl.: G06Q 50/12, G07F 17/00

(54) **VERFAHREN UND ANZEIGEEINRICHTUNG ZUR DARSTELLUNG VON PARAMETERN EINER NAHRUNGSMITTELMASCHINE SOWIE NAHRUNGSMITTELMASCHINE**
METHOD AND DISPLAY DEVICE FOR PRESENTING PARAMETERS OF A FOOD MACHINE, AND FOOD MACHINE
PROCÉDÉ ET DISPOSITIF D'AFFICHAGE POUR PRÉSENTER DES PARAMÈTRES D'UNE MACHINE POUR ALIMENTS, ET MACHINE POUR ALIMENTS

(30) Priorität: 01.04.2020 DE 102020204259; 27.08.2020 DE 102020210856
(43) Veröffentlichungstag der Anmeldung: 08.02.2023
(73) Patentinhaber: GEA Food Solutions Germany GmbH, 35216 Biedenkopf-Wallau (DE)
(72) Erfinder: CILINGIR, Erdal, 57334 Bad Laasphe (DE); DE HOOG, Peter, 6049 LC Herten (NL); MAIDEL, Stefan, 87437 Kempten (DE); THEELEN, Dennis, 5961 ZL Horst (NL); REHN, Jochen, 35216 Biedenkopf-Wallau (DE)
(74) Vertreter: Kutzenberger Wolff & Partner
(86) Internationale Anmeldenummer: PCT/EP2021/058329
(87) Internationale Veröffentlichungsnummer: WO 2021/198274

(56) Entgegenhaltungen:
- WO-A1-2016/179424
- DE-A1- 102015 103 596

## Beschreibung

### Stand der Technik

Die vorliegende Erfindung betrifft ein Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung der Nahrungsmittelmaschine, wobei in einem Speicher ein erstes Rezept gespeichert ist, welches mehrere Parameter umfasst, denen jeweils ein erster Parameterwert zugewiesen ist. Ferner betrifft die Erfindung eine Anzeigeeinrichtung für eine Nahrungsmittelmaschine, insbesondere eine Nahrungsmittelverarbeitungsmaschine oder eine Nahrungsmittelverpackungsmaschine. Ein weiterer Gegenstand der Erfindung ist eine Nahrungsmittelmaschine, insbesondere eine Nahrungsmittelverarbeitungsmaschine oder eine Nahrungsmittelverpackungsmaschine, mit einer Anzeigeeinrichtung.

Nahrungsmittelmaschinen, wie beispielsweise Nahrungsmittelverarbeitungsmaschinen oder Nahrungsmittelverpackungsmaschinen, weisen in der Regel eine Anzeigeeinrichtung auf, in der Informationen zum momentanen Zustand der Nahrungsmittelmaschine angezeigt werden können. Oftmals ist es möglich, einen oder mehrere Messwerte anzuzeigen. Darüber hinaus können derartigen Anzeigeeinrichtungen typischerweise auch momentan eingestellte Parameterwerte der Maschine entnommen werden, beispielsweise eine durch einen Bediener eingestellte und somit vorgegebene Geschwindigkeit eines Antriebs der Maschine.

Die Druckschrift WO 2016/179424 A1 offenbart einen automatisierten Ofen, der über vordefinierte Rezepte, die Steuerungsbefehle für die Komponenten des Ofens oder Zielwerte für die Ofenkomponenten umfassen, gesteuert werden kann. Ein Rezept kann durch die Benutzung des Ofens für eine Essenszubereitung erstellt und gespeichert werden. Bei der Zubereitung einer Nahrung nach einem Rezept werden Unterschiede und Gemeinsamkeiten zwischen dem verwendeten und einem ähnlichen Rezept festgestellt und gespeichert.

Die Druckschrift DE 10 2015 103596 A1 offenbart eine Speicherung von Referenzwerten für die Nahrungsmittelzubereitung durch eine Küchenmaschine mittels eines bestimmten Rezeptes, wobei während der Zubereitung Abweichungen von den Referenzwerten festgestellt und entsprechende Bedienhinweise an den Benutzer ausgegeben werden können.

Die Darstellung der momentan eingestellten Parameterwerte ermöglicht es einem Bediener, sich ein Bild vom momentanen Zustand der Maschine zu machen. Insbesondere in solchen Situationen, in denen der Bediener gewechselt hat, beispielsweise bei einem Schichtwechsel, ist es für den Bediener aber ohne zusätzliche Information von einem vorherigen Bediener oftmals nur schwer möglich, Änderungen der Parameterwerte nachzuvollziehen. Solche Änderungen können dazu beigetragen haben, dass sich die Maschine in einem Fehlerzustand befindet oder zukünftig befinden wird.

### Offenbarung der Erfindung

Die Aufgabe der vorliegenden Erfindung ist es, einem Bediener, die Ermittlung einer Fehlerursache zu erleichtern.

Zur Lösung der Aufgabe wird gemäß der Erfindung ein Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung der Nahrungsmittelmaschine vorgeschlagen, wobei in einem Speicher ein erstes Rezept gespeichert ist, welches mehrere Parameter umfasst, denen jeweils ein erster Parameterwert zugewiesen ist und ein zweites Rezept gespeichert ist, welches mehrere Parameter umfasst, denen jeweils ein zweiter Parameterwert zugewiesen ist,
a. wobei in einem Ermittlungsschritt ein Parameter ermittelt wird, der in dem ersten und dem zweiten Rezept enthalten ist und dem ein erster Parameterwert des ersten Rezepts und ein zweiter Parameterwert des zweiten Rezepts zugewiesen ist, welche sich voneinander unterscheiden,
b. wobei in einem ersten Anzeigeschritt mittels der Anzeigeeinrichtung zu dem ermittelten Parameter gleichzeitig der erste und der zweite Parameterwert angezeigt wird.

Durch die gemäß der Erfindung vorgesehene Ermittlung und gleichzeitige Anzeige des ersten Parameterwerts des ersten Rezepts und des zweiten Parameterwerts des zweiten Rezepts für denselben Parameter, kann der Bediener der Nahrungsmittelmaschine Veränderungen gegenüber einem ersten, als Referenz herangezogenen Rezept in einem zweiten, beispielsweise momentan verwendeten Rezept erkennen. Der Bediener kann auf diese Weise schneller solche Parameterwerte erfassen, die verändert wurden. Hierdurch wird es dem Bediener erleichtert, etwaige Ursachen zu ermitteln, die zu einem unerwünschten Zustand der Nahrungsmittelmaschine, insbesondere einem Fehlerzustand, geführt haben oder führen werden.

Unter einem Rezept wird im Sinne der Erfindung ein Datensatz verstanden, der Parameterwerte aufweist, die jeweils einem Parameter zugeordnet sind. Die Parameter stellen einstellbare, d.h. beispielsweise durch einen Bediener vorgebbare, Eigenschaften der Nahrungsmittelmaschine dar. Solche Parameter können beispielsweise Zeitangaben zum Aktivieren und/oder Deaktivieren von Elementen der Nahrungsmittelmaschine, Angaben zum Aktivierungszustand von Funktionen oder Elementen der Nahrungsmittelmaschine, oder andere einstellbare physikalische Größen und/oder Sollwerte von Regelkreisen sein. Als Parameter im Sinne der Erfindung werden insbesondere nicht Messwerte verstanden.

Bei dem Bediener der Nahrungsmittelmaschine kann es sich beispielsweise um einen Arbeiter, einen Schichtleiter oder einen Wartungsmitarbeiter handeln.

Bevorzugt wird in dem Ermittlungsschritt zur Ermittlung des in dem ersten und zweiten Rezept enthaltenen Parameters ein Vergleich von Parametern des ersten Rezepts und des zweiten Rezepts durchgeführt. Dabei können den Parametern des ersten Rezepts und des zweiten Rezepts zugewiesene Attribute, beispielsweise eine Bezeichnung, miteinander verglichen werden. Zur Ermittlung sich unterscheidender Parameterwerte in dem Ermittlungsschritt kann ein Vergleich der Parameterwerte des in dem ersten und zweiten Rezept enthaltenen Parameters erfolgen, beispielsweise durch einen Vergleich von Binärdaten.

Gemäß einer vorteilhaften Ausgestaltung der Erfindung ist vorgesehen, dass das erste Rezept ein vorgegebenes Standard-Rezept ist und das zweite Rezept ein durch einen Bediener der Nahrungsmittelmaschine gegenüber dem Standardrezept verändertes Varianten-Rezept ist. Es ist möglich, dass die Anzeigeeinrichtung den ersten Anzeigeschritt einnimmt, sobald ein Parameterwert eines Parameters des momentan gewählten (zweiten) Rezept) geändert wird. Bei einer derartigen Ausgestaltung des Verfahrens kann somit stets der veränderte Parameterwert gemäß dem momentan gewählten Rezept als auch ein vorgegebener erster Parameterwert angezeigt werden, welcher einen Standard- oder Defaultwert bildet. Eine solche Ausgestaltung bietet den Vorteil, dass der Bediener während des Einstellvorgangs eines Parameters unmittelbar einen Vergleich mit dem Standard- bzw. Defaultwert vornehmen kann.

Eine alternative, vorteilhafte Ausgestaltung sieht vor, dass - in einem dem Ermittlungsschritt vorhergehenden Auswahlschritt - das erste Rezept und das zweite Rezept durch einen Bediener der Nahrungsmittelmaschine aus einer vorgegebenen Menge an gespeicherten Rezepten ausgewählt wird. Gemäß einer solchen Ausgestaltung ist es für einen Bediener möglich, zwei beliebige Rezepte auszuwählen und deren Parameterwerte miteinander zu vergleichen. Die zwei Rezepte können zwei verschiedene Varianten oder Versionen einer gemeinsamen Rezeptfamilie sein, die vorzugsweise dasselbe herzustellende und/oder zu verpackende Nahrungsmittelprodukt betreffen. Alternativ ist es möglich, dass das erste und das zweite Rezept verschiedene herzustellende und/oder zu verpackende Nahrungsmittelprodukte betreffen, aber zumindest einen gemeinsamen Parameter aufweisen, dessen jeweiliger Parameterwert in dem ersten und zweiten Rezept miteinander verglichen werden kann.

Bevorzugt ist vorgesehen, dass zur Auswahl des ersten Rezepts und/oder des zweiten Rezepts ein Indikator durch eine Detektionseinrichtung erfasst wird und durch eine Auswahleinheit das erste und/oder zweite Rezept in Abhängigkeit von dem erfassten Indikator ermittelt wird. Die Auswahleinheit kann eine gespeicherte Verknüpfung des Indikators mit dem Rezept auslesen und ein zu der jeweiligen Nahrungsmittelmaschine passendes Rezept auswählen. Der Indikator kann beispielsweise auf einem Auftragsdokument oder einem Behälter aufgebracht oder an einem solchen angeordnet sein.

Bevorzugt ist der Indikator ein optisch erfassbarer Indikator, beispielsweise ein Strichcode (Barcode) oder ein zweidimensionaler Code, und die Detektionseinrichtung ist eine optische Detektionseinrichtung, beispielsweise eine Strichcode-Detektionseinrichtung oder eine Detektionseinrichtung zum Detektieren eines zweidimensionalen Codes. Alternativ kann der Indikator ein durch ein elektromagnetisches Feld erfassbarer Indikator sein, beispielsweise ein RFID-Transponder, und die Detektionseinrichtung eine Detektionseinrichtung zum Auslesen eines durch ein elektromagnetisches Feld erfassbaren Indikators, beispielsweise ein RFID-Lesegerät.

Bevorzugt ist vorgesehen, dass das erste und das zweite Rezept in einem Speicher der Nahrungsmittelmaschine gespeichert sind. Insofern können die Rezepte zum Betrieb der Nahrungsmittelmaschine in der Nahrungsmittelmaschine selbst vorgehalten werden. Eine Übertragung der Daten von einem externen Speicher zu der Nahrungsmittelmaschine bzw. der Anzeigeeinrichtung ist nicht erforderlich.

Eine alternative, bevorzugte Ausgestaltung sieht vor, dass das erste und das zweite Rezept in einem mit der Nahrungsmittelmaschine verbundenen externen Speicher, insbesondere einem Cloud-Speicher, gespeichert sind. Zwar ist bei einer derartigen Ausgestaltung ein Datenaustauch zwischen der Nahrungsmittelmaschine, insbesondere der Anzeigeeinrichtung, erforderlich, es kann aber der Vorteil erreicht werden, dass dieselben in einem gemeinsamen externen Speicher gespeicherten Rezepte von mehreren, verschiedenen Nahrungsmittelmaschinen abrufbar sind.

Gemäß einer vorteilhaften Ausgestaltung des erfindungsgemäßen Verfahrens wird in dem ersten Anzeigeschritt mittels der Anzeigeeinrichtung zusätzlich zu dem ersten und zweiten Parameterwert des ermittelten Parameters auch ein weiterer Parameterwert eines weiteren Parameters angezeigt, der in dem ersten und dem zweiten Rezept enthalten ist und dem gemäß dem ersten Rezept und dem zweiten Rezept ein identischer dritter Parameterwert zugewiesen ist. Da dem Bediener nicht nur diejenigen Parameterwerte angezeigt werden, die sich in den beiden Rezepten unterscheiden, sondern auch solche, die identisch sind, kann dem Bediener das Verständnis des Rezepts, insbesondere des Zusammenspiels der einzelnen Parameterwerte miteinander, erleichtert werden.

Besonders vorteilhaft ist eine Ausgestaltung, bei welcher in einem zweiten Anzeigeschritt mittels der Anzeigeeinrichtung zusätzlich zu dem ersten und zweiten Parameterwert des ermittelten Parameters auch ein weiterer Parameterwert eines weiteren Parameters angezeigt wird, der in dem ersten und dem zweiten Rezept enthalten ist und dem gemäß dem ersten Rezept und dem zweiten Rezept ein identischer dritter Parameterwert zugewiesen ist, wobei der weitere Parameterwert in dem ersten Anzeigeschritt nicht angezeigt wird und wobei durch eine Eingabe eines Bedieners zwischen dem ersten und dem zweiten Anzeigeschritt gewechselt wird, insbesondere hin- und her gewechselt wird. Bei einer derartigen Ausgestaltung ist es dem Bediener möglich, die Anzeige des oder der identischen Parameterwerte selektiv zu aktivieren oder zu deaktivieren.

Vorteilhaft ist es, wenn der dritte Parameterwert in einer anderen Darstellungsform, beispielsweise nur als Einzelwert und/oder in einer anderen Schriftart und/oder in einer anderen Schriftgröße und/oder in einer anderen Farbe und/oder vor einer anderen Hintergrundfarbe und/oder in einer anderen Helligkeit angezeigt wird als der erste und der zweite Parameterwert. Hierdurch kann die Sichtbarkeit des ersten und zweiten Parameterwerts verbessert und damit dem Bediener das Erfassen derjenigen Parameterwerte, die sich in den Rezepten unterscheiden, erleichtert werden.

Eine vorteilhafte Ausgestaltung sieht vor, dass die Anzeigeeinrichtung einen berührungsempfindlichen Bildschirm umfasst, beispielsweise einen Touch-Bildschirm. Insofern kann die Anzeigeeirichtung Teil einer Bedien- und Anzeigeeinrichtung sein, über die sowohl Informationen angezeigt werden als auch Bedienbefehle, beispielsweise das Berühren eines Bildschirmbereichs oder eine Wischgeste, empfangen werden können.

Ein weiterer Gegenstand der Erfindung ist eine Anzeigeeinrichtung für eine Nahrungsmittelmaschine, insbesondere eine Nahrungsmittelverarbeitungsmaschine oder eine Nahrungsmittelverpackungsmaschine, die dazu eingerichtet ist,
a. in einem Ermittlungsschritt einen Parameter zu ermitteln, der in einem ersten und einem zweiten Rezept enthalten ist und dem ein erster Parameterwert des ersten Rezepts und ein zweiter Parameterwert des zweiten Rezepts zugewiesen ist, welche sich voneinander unterscheiden,
b. in einem ersten Anzeigeschritt zu dem ermittelten Parameter gleichzeitig den ersten und den zweiten Parameterwert anzuzeigen.

Ein weiterer Gegenstand der Erfindung ist eine Nahrungsmittelmaschine, insbesondere eine Nahrungsmittelverarbeitungsmaschine oder eine Nahrungsmittelverpackungsmaschine, mit einer vorstehend beschriebenen Anzeigeeinrichtung.

Die Nahrungsmittelmaschine kann beispielsweise als Schneidemaschine, Entfroster, Kutter, Mischer, Tiefzieh-Verpackungsmaschine, Vertikalform-Füllversiegelungsmaschine oder Horizontalform-Füllversiegelungsmaschine ausgebildet sein.

Bei der Anzeigeeinrichtung und der Nahrungsmittelmaschine können dieselben Vorteile erreicht werden, die bereits im Zusammenhang mit dem erfindungsgemäßen Verfahren erläutert worden sind. Die im Zusammenhang mit dem Verfahren beschriebenen vorteilhaften Ausgestaltungen und Merkmale können auch bei der Anzeigeeinrichtung und der Nahrungsmittelmaschine allein oder in Kombination Anwendung finden.

Zur Lösung eingangs genannter Aufgabe wird ferner ein Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung der Nahrungsmittelmaschine vorgeschlagen, wobei in einem Speicher ein erstes Rezept gespeichert ist, welches mehrere Parameter umfasst, denen jeweils ein erster Parameterwert zugewiesen ist und ein zweites Rezept gespeichert ist, welches mehrere Parameter umfasst, denen jeweils ein zweiter Parameterwert zugewiesen ist,
a. wobei in einem Ermittlungsschritt ein Parameter ermittelt wird, der in dem zweiten Rezept enthalten ist und in dem ersten Rezept nicht enthalten ist,
b. wobei in einem ersten Anzeigeschritt mittels der Anzeigeeinrichtung der ermittelte Parameter und eine Angabe, insbesondere eine Bezeichnung, des zweiten Rezepts angezeigt wird.

Durch die gemäß der Erfindung vorgesehene Ermittlung und Anzeige des in dem ersten Rezept, nicht aber in dem zweiten Rezept enthaltenen Parameters, kann der Bediener der Nahrungsmittelmaschine Veränderungen gegenüber einem ersten, als Referenz herangezogenen Rezept in einem zweiten, beispielsweise momentan verwendeten Rezept erkennen. Der Bediener kann auf diese Weise schneller solche Parameter erfassen, die beispielsweise durch eine Änderung des Rezepts und/oder durch einen Umbau der Nahrungsmittelmaschine, im Vergleich zu dem ersten Rezept hinzugefügt wurden. Hierdurch wird es dem Bediener erleichtert, etwaige Ursachen zu ermitteln, die zu einem unerwünschten Zustand der Nahrungsmittelmaschine, insbesondere einem Fehlerzustand, geführt haben oder führen werden.

Unter einem Rezept wird ein Datensatz verstanden, der Parameterwerte aufweist, die jeweils einem Parameter zugeordnet sind. Die Parameter stellen einstellbare, d.h. beispielsweise durch einen Bediener vorgebbare, Eigenschaften der Nahrungsmittelmaschine dar. Solche Parameter können beispielsweise Zeitangaben zum Aktivieren und/oder Deaktivieren von Elementen der Nahrungsmittelmaschine, Angaben zum Aktivierungszustand von Funktionen oder Elementen der Nahrungsmittelmaschine, oder andere einstellbare physikalische Größen und/oder Sollwerte von Regelkreisen sein. Als Parameter im Sinne der Erfindung werden insbesondere nicht Messwerte verstanden.

Bei dem Bediener der Nahrungsmittelmaschine kann es sich beispielsweise um einen Arbeiter, einen Schichtleiter oder einen Wartungsmitarbeiter handeln.

Bevorzugt wird in dem Ermittlungsschritt zur Ermittlung des in dem zweiten, nicht aber in dem ersten Rezept enthaltenen Parameters ein Vergleich der Menge der Parameter des ersten Rezepts und der Menge der Parameter des zweiten Rezepts durchgeführt. Dabei können den Parametern des ersten Rezepts und des zweiten Rezepts zugewiesene Attribute, beispielsweise eine Bezeichnung, miteinander verglichen werden.

Gemäß einer vorteilhaften Ausgestaltung der Erfindung ist vorgesehen, dass das erste Rezept ein vorgegebenes Standard-Rezept ist und das zweite Rezept ein durch einen Bediener der Nahrungsmittelmaschine gegenüber dem Standardrezept verändertes Varianten-Rezept ist. Es ist möglich, dass die Anzeigeeinrichtung den ersten Anzeigeschritt einnimmt, sobald ein Parameter des momentan gewählten (zweiten) Rezepts hinzugefügt wird. Bei einer derartigen Ausgestaltung des Verfahrens kann somit stets der hinzugefügte Parameter gemäß dem momentan gewählten Rezept angezeigt werden sowie dessen Zugehörigkeit zu einem (hier dem zweiten) Rezept. Eine solche Ausgestaltung bietet den Vorteil, dass der Bediener während des Einstellvorgangs eines Parameters unmittelbar einen Vergleich mit dem Standard- bzw. Default-Rezept vornehmen kann.

Eine alternative, vorteilhafte Ausgestaltung sieht vor, dass - in einem dem Ermittlungsschritt vorhergehenden Auswahlschritt - das erste Rezept und das zweite Rezept durch einen Bediener der Nahrungsmittelmaschine aus einer vorgegebenen Menge an gespeicherten Rezepten ausgewählt wird. Gemäß einer solchen Ausgestaltung ist es für einen Bediener möglich, zwei beliebige Rezepte auszuwählen und deren Parameterwerte miteinander zu vergleichen. Die zwei Rezepte können zwei verschiedene Varianten oder Versionen einer gemeinsamen Rezeptfamilie sein, die vorzugsweise dasselbe herzustellende und/oder zu verpackende Nahrungsmittelprodukt betreffen. Alternativ ist es möglich, dass das erste und das zweite Rezept verschiedene herzustellende und/oder zu verpackende Nahrungsmittelprodukte betreffen, aber zumindest einen gemeinsamen Parameter aufweisen, dessen jeweiliger Parameterwert in dem ersten und zweiten Rezept miteinander verglichen werden kann.

Bevorzugt ist vorgesehen, dass das erste und das zweite Rezept in einem Speicher der Nahrungsmittelmaschine gespeichert sind. Insofern können die Rezepte zum Betrieb der Nahrungsmittelmaschine in der Nahrungsmittelmaschine selbst vorgehalten werden. Eine Übertragung der Daten von einem externen Speicher zu der Nahrungsmittelmaschine bzw. der Anzeigeeinrichtung ist nicht erforderlich.

Eine alternative, bevorzugte Ausgestaltung sieht vor, dass das erste und das zweite Rezept in einem mit der Nahrungsmittelmaschine verbundenen externen Speicher, insbesondere einem Cloud-Speicher, gespeichert sind. Zwar ist bei einer derartigen Ausgestaltung ein Datenaustauch zwischen der Nahrungsmittelmaschine, insbesondere der Anzeigeeinrichtung, erforderlich, es kann aber der Vorteil erreicht werden, dass dieselben in einem gemeinsamen externen Speicher gespeicherten Rezepte von mehreren, verschiedenen Nahrungsmittelmaschinen abrufbar sind.

Eine vorteilhafte Ausgestaltung sieht vor, dass die Anzeigeeinrichtung einen berührungsempfindlichen Bildschirm umfasst, beispielsweise einen Touch-Bildschirm. Insofern kann die Anzeigeeirichtung Teil einer Bedien- und Anzeigeeinrichtung sein, über die sowohl Informationen angezeigt werden als auch Bedienbefehle, beispielsweise das Berühren eines Bildschirmbereichs oder eine Wischgeste, empfangen werden können.

Ein weiterer Gegenstand der Erfindung ist eine Anzeigeeinrichtung für eine Nahrungsmittelmaschine, insbesondere eine Nahrungsmittelverarbeitungsmaschine oder eine Nahrungsmittelverpackungsmaschine, die dazu eingerichtet ist,
a. in einem Ermittlungsschritt einen Parameter zu ermitteln, der in einem zweiten Rezept enthalten ist und in einem ersten Rezept nicht enthalten ist; und
b. in einem ersten Anzeigeschritt den ermittelten Parameter und eine Angabe, insbesondere eine Bezeichnung, des zweiten Rezepts anzuzeigen.

Ein weiterer Gegenstand der Erfindung ist eine Nahrungsmittelmaschine, insbesondere eine Nahrungsmittelverarbeitungsmaschine oder eine Nahrungsmittelverpackungsmaschine, mit einer vorstehend beschriebenen Anzeigeeinrichtung.

Die Nahrungsmittelmaschine kann beispielsweise als Schneidemaschine, Entfroster, Kutter, Mischer, Tiefzieh-Verpackungsmaschine, Vertikalform-Füllversiegelungsmaschine oder Horizontalform-Füllversiegelungsmaschine ausgebildet sein.

Die Nahrungsmittelmaschine kann geeignet sein für Fleisch, Geflügel, Fisch / Meeresfrüchte, Käse, Fleischersatz, Eiweißersatzprodukte wie aus Insekten oder Pilzen, gezüchtetes Fleisch, Gemüse, Pizza, Brot, Backwaren, Gebäck, Kekse oder ähnliches. Die als Nahrungsmittelverarbeitungsmaschine, insbesondere als Fleischverarbeitungsmaschine, ausgebildete Nahrungsmittelmaschine kann ausgebildet sein als Auftau-, Kutter-, Mixer-, Tumbler-, Zerkleiner-, Emulgier-, Mariniermaschine, Massiermaschine, Fleischinjektor, Filtrationsmaschine für Lake und/oder Fleischzutaten, Kühlmaschine für Lake, Fleischpresse, Gefriermaschine, Auftaumaschine, Zartmacher, Schüttelmaschine, Fettanalysemaschine, Pumpmaschine, Zerkleinerungsmaschine, Form- oder Portioniermaschine, Beschichtungsmaschine wie Teig-/ Panier-/ Brösel-/ Speiseölmaschine, Entstaubungsmaschine, Trocknungs- / Koch- / Bräunungs- / Brat- / Dämpf- / Sous-vide-Maschine, Bratmaschine, Grill, Räuchermaschine, Frittieröl-Filtermaschine, Ofen- / Heiz- / Kochanlage, Lebensmittelscanner, Aufschneidemaschine, Waage, Erkennungssystem für Fremdkörper wie Metall/ Kunststoff/ Knochen, Reinigungssystem für den Nahrungsmittelkontaktbereich z. B. für Injektionsnadeln, oder Transportsystem, Befüll- / Be- und/oder Entladesystem und/oder Fördersystem und/oder Dosiersystem. Die als Nahrungsmittelverpackungsmaschine ausgebildete Nahrungsmittelmaschine kann ausgebildet sein als Tiefziehverpackungsmaschine, vertikale Schlauchbeutelmaschine oder horizontale Schlauchbeutelmaschine, Flaschen-Abfüllmaschine, Abfüllmaschine, Etikettierer / Drucker, Lutscherform-/ Kühl-/ Einschlagmaschine, Lutscher-Verpackungsmaschine, Zuckerwürfelform-/ Trocknungs-/ Verpackungsmaschine, Ableger. Alternativ kann die Nahrungsmittelmaschine ein Automatisierungs- / Steuerungs- / Liniensteuerungssystem für eine oder mehrere der zuvor genannten Maschinen sein.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig.** 1 zeigt eine schematische Darstellung einer Anzeige, die mit einem Verfahren zur Darstellung von Parametern einer Nahrungsmittelmaschine gemäß einem Ausführungsbeispiel der Erfindung angezeigt wird.

Die Fig. 2 zeigt eine schematische Darstellung einer Anzeige, die mit einem Verfahren zur Darstellung von Parametern einer Nahrungsmittelmaschine gemäß einem weiteren Ausführungsbeispiel der Erfindung angezeigt wird.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

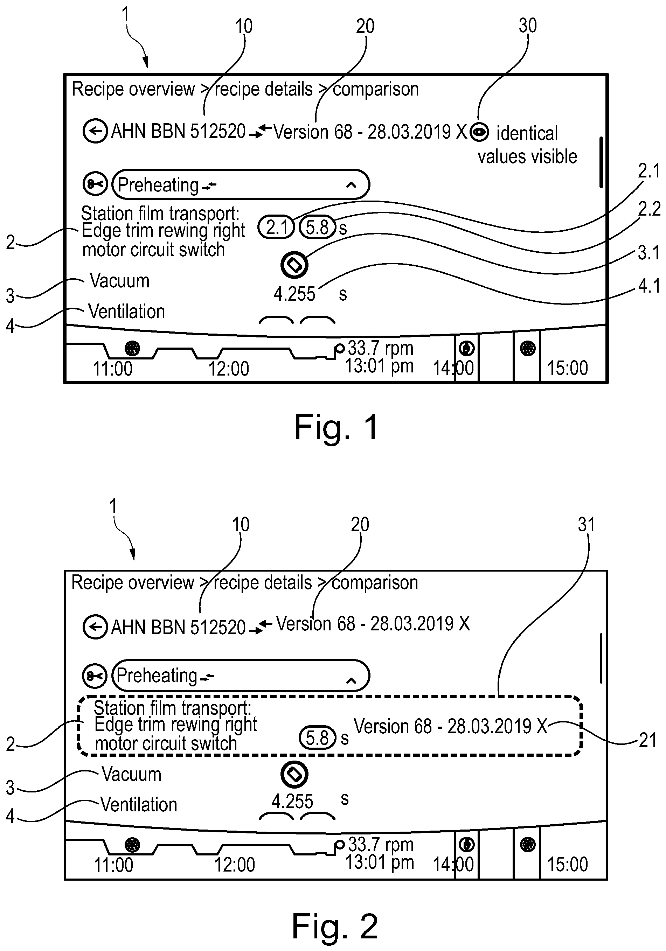

Die Darstellung in Fig. 1 zeigt eine Anzeige einer Anzeigeeinrichtung 1 für eine Nahrungsmittelmaschine, insbesondere eine Nahrungsmittelverarbeitungsmaschine oder eine Nahrungsmittelverpackungsmaschine. Die Anzeigeeinrichtung 1 gemäß dem Ausführungsbeispiel umfasst einen berührungsempfindlichen Bildschirm mit einer Bildschirmfläche. Über diesen kann eine Anzeige von Informationen erfolgen und es können Bedieneingaben eines Bedieners detektiert werden, beispielsweise Berührungen bestimmter Bereiche des Bildschirms oder Wischgesten.

Wie der Darstellung in Fig. 1 weiter entnommen werden kann, ist die Anzeigeeinrichtung 1 dazu eingerichtet, einem ersten Anzeigeschritt zu einem Parameter 2, gleichzeitig sowohl einen ersten Parameterwert 2.1 und einen zweiten Parameterwert 2.2 anzuzeigen. Diese Parameterwerte sind zwei unterschiedlichen Parameterdatensätzen zugeordnet, die als Rezepte bezeichnet werden und deren Bezeichnungen in der Anzeigeeinrichtung 1 dargestellt sind, vgl. die Bezugszeichen 10 und 20. In einem dem ersten Anzeigeschritt zeitlich vorgelagerten Ermittlungsschritt werden aus den Parametern der beiden Rezepte zunächst ein oder mehrere Parameter ermittelt, welche in dem ersten und dem zweiten Rezept enthalten sind und denen jeweils ein erster Parameterwert 2.1 des ersten Rezepts (hier "2.1 s") und ein zweiter Parameterwert 2.2 des zweiten Rezepts (hier "5,8 s") zugewiesen sind, welche sich voneinander unterscheiden. Daher ermöglicht die in Fig.1 dargestellte Ansicht einen Vergleich der Parameterwerte 2.1, 2.2 zweier Rezepte, bzw. einen Vergleich ganzer Rezepte.

Die Rezepte sind in einem Speicher hinterlegt, der als Teil der Nahrungsmittelmaschine ausgestaltet ist. Das erste Rezept umfasst dabei mehrere Parameter, denen jeweils ein erster Parameterwert zugewiesen ist und das zweite Rezept umfasst mehrere Parameter, denen jeweils ein zweiter Parameterwert zugewiesen ist.

Bei dem ersten Rezept 10 kann es sich um ein vorgegebenes Standard-Rezept handeln. Das zweite Rezept 20 kann ein Rezept sein, welches durch einen Bediener der Nahrungsmittelmaschine gegenüber dem Standard-Rezept verändert worden ist. Mittels der in Fig. 1 gezeigten Anzeige kann diese Änderung anschaulich gemacht werden.

Es kann vorgesehen sein, dass das zweite Rezept 20 bei der Veränderung des Rezepts 10 automatisch gespeichert wird, wobei der Bezeichnung des zweiten Rezepts eine Versionsangabe beigefügt wird, beispielsweise eine um ein höhere Versionsnummer vergeben wird.

Alternativ können die zu vergleichenden Rezepte 10, 20 durch den Bediener gezielt ausgewählt werden. Beispielsweise kann in einem dem Ermittlungsschritt vorhergehenden Auswahlschritt - das erste Rezept 10 und das zweite Rezept 20 durch einen Bediener der Nahrungsmittelmaschine aus einer vorgegebenen Menge an gespeicherten Rezepten ausgewählt wird. Hierzu kann in dem Auswahlschritt in der Anzeigeeinrichtung 1 eine Liste an gespeicherten Rezepten angezeigt werden. Der Bediener kann durch Anwahl, beispielsweise durch Berühren der Anzeigefläche des Anzeigeeinrichtung 1, zwei zu vergleichende Rezepte auswählen.

Alternativ ist es möglich, dass der Benutzer eines oder mehrere der zu vergleichenden Rezepte 10, 20 auswählt, indem ein Indikator, beispielsweise ein Strichcode, durch eine Detektionseinrichtung, beispielsweise eine optische Detektionseinrichtung nach Art eines Strichcode-Lesers, erfasst wird. Eine Auswahleinheit kann dann das jeweilige Rezept in Abhängigkeit von dem erfassten Indikator aus der vorgegebenen Menge an gespeicherten Rezepten ermitteln.

Wie in **Fig. 1** weiter gezeigt ist, kann in dem ersten Anzeigeschritt mittels der Anzeigeeinrichtung 1 zusätzlich zu dem ersten und zweiten Parameterwert 2.1, 2.1 des ermittelten Parameters 2 auch einer oder mehrere weitere Parameterwerte 3.1, 4.1 weiterer Parameter 3, 4 angezeigt werden, die in dem ersten Rezept 10 und dem zweiten Rezept 20 enthalten sind und denen gemäß dem ersten Rezept 10 und dem zweiten Rezept 20 jeweils ein identischer weiterer Parameterwert zugewiesen 3.1, 4.1 ist. Im vorliegenden Fall ist dem oberen Parameter 3 zugeordnete Parameterwert 3.1 ein boolescher Wert, der wahr oder falsch sein kann und der dem unteren Parameter 4 zugeordnete Parameterwert 4.1 ist ein Zahlenwert, der eine Zeit in Sekunden angibt.

Die weiteren Parameterwerte 3.1, 4.1 werden in der Anzeigeeinrichtung 1 in einer anderen Farbe und/oder einer anderen Helligkeit angezeigt als der erste und der zweite Parameterwert 2.1, 2.2. Vorliegend ist die Helligkeit der weiteren Parameterwerte 3.1, 4.1 geringer gewählt bzw. die Farbe heller gewählt, so dass die weiteren Parameterwerte 3.1, 4.1 gegenüber dem erste und der zweite Parameterwert 2.1, 2.2. zurücktreten und die Aufmerksamkeit des Bedieners auf den ersten und der zweiten Parameterwert 2.1, 2.2 gelenkt wird.

Die Anzeige der weiteren Parameterwerte 3.1, 4.1 kann aktiviert und deaktiviert werden. Hierzu umfasst die Anzeigevorrichtung ein Symbol 30. Bei einer Eingabe des Bedieners, beispielsweise der Betätigung des Symbols 30 durch Drücken auf die Anzeigefläche der Anzeigeeinrichtung 1 im Bereich des Symbols 30, erfolgt das Umschalten zwischen der Darstellung der weiteren Parameterwerte 3.1, 4.1 und einer Anzeige ohne diese weiteren Parameterwerte 3.1, 4.1. Insofern kann zwischen diesen beiden Anzeigeschritten hin- und her gewechselt werden.

Gemäß einer Abwandlung des Ausführungsbeispiels sind die Rezepte in einem mit der Nahrungsmittelmaschine verbundenen externen Speicher, insbesondere einem Cloud-Speicher, gespeichert sind.

Bei den vorstehend beschriebenen Anzeigeeinrichtungen 1 kann ein Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung 1 der Nahrungsmittelmaschine zur Anwendung kommen, wobei in einem Speicher ein erstes Rezept gespeichert ist, welches mehrere Parameter umfasst, denen jeweils ein erster Parameterwert zugewiesen ist und ein zweites Rezept gespeichert ist, welches mehrere Parameter umfasst, denen jeweils ein zweiter Parameterwert zugewiesen ist,
a. wobei in einem Ermittlungsschritt ein Parameter ermittelt wird, der in dem ersten und dem zweiten Rezept enthalten ist und dem ein erster Parameterwert des ersten Rezepts und ein zweiter Parameterwert des zweiten Rezepts zugewiesen ist, welche sich voneinander unterscheiden,
b. wobei in einem ersten Anzeigeschritt mittels der Anzeigeeinrichtung (1) zu dem ermittelten Parameter gleichzeitig der erste und der zweite Parameterwert angezeigt wird.

Hierdurch wird es dem Bediener erleichtert, etwaige Ursachen zu ermitteln, die zu einem unerwünschten Zustand der Nahrungsmittelmaschine, insbesondere einem Fehlerzustand, geführt haben.

Die Darstellung in **Fig. 2** zeigt eine weitere Anzeige einer Anzeigeeinrichtung 1 für eine Nahrungsmittelmaschine, insbesondere eine Nahrungsmittelverarbeitungsmaschine oder eine Nahrungsmittelverpackungsmaschine. Die Anzeigeeinrichtung 1 gemäß Fig. 2 umfasst einen berührungsempfindlichen Bildschirm mit einer Bildschirmfläche. Über diesen kann eine Anzeige von Informationen erfolgen und es können Bedieneingaben eines Bedieners detektiert werden, beispielsweise Berührungen bestimmter Bereiche des Bildschirms oder Wischgesten.

Wie der Darstellung in **Fig. 2** weiter entnommen werden kann, ist die Anzeigeeinrichtung 1 dazu eingerichtet, einem ersten Anzeigeschritt zu einem Parameter 2, eine Angabe des Rezepts anzuzeigen, in welchem dieser Parameter verwendet wird. Die Angabe 21 des Rezepts erfolgt über die Bezeichnung des Rezepts. Zudem wird der Parameter durch ein Symbol 31 markiert - beispielsweise wie in Fig. 2 gezeigt, durch einen Kasten mit gestrichelter Linie. In einem dem ersten Anzeigeschritt zeitlich vorgelagerten Ermittlungsschritt wird aus den Parametern zweier Rezepte zunächst ein oder mehrere Parameter ermittelt, welche in dem zweiten Rezept enthalten sind nicht aber in dem ersten Rezept. Daher ermöglicht die in **Fig.2** dargestellte Ansicht einen Vergleich der Rezepte.

Die Rezepte sind in einem Speicher hinterlegt, der als Teil der Nahrungsmittelmaschine ausgestaltet ist. Das erste Rezept umfasst dabei mehrere Parameter, denen jeweils ein erster Parameterwert zugewiesen ist und das zweite Rezept umfasst mehrere Parameter, denen jeweils ein zweiter Parameterwert zugewiesen ist.

Bei dem ersten Rezept 10 kann es sich um ein vorgegebenes Standard-Rezept handeln. Das zweite Rezept 20 kann ein Rezept sein, welches durch einen Bediener der Nahrungsmittelmaschine gegenüber dem Standard-Rezept verändert worden ist. Mittels der in Fig. 2 gezeigten Anzeige kann diese Änderung anschaulich gemacht werden.

Es kann vorgesehen sein, dass das zweite Rezept 20 bei der Veränderung des Rezepts 10 automatisch gespeichert wird, wobei der Bezeichnung des zweiten Rezepts eine Versionsangabe beigefügt wird, beispielsweise eine um eins höhere Versionsnummer vergeben wird.

Alternativ können die zu vergleichenden Rezepte 10, 20 durch den Bediener gezielt ausgewählt werden. Beispielsweise kann in einem dem Ermittlungsschritt vorhergehenden Auswahlschritt - das erste Rezept 10 und das zweite Rezept 20 durch einen Bediener der Nahrungsmittelmaschine aus einer vorgegebenen Menge an gespeicherten Rezepten ausgewählt werden. Hierzu kann in dem Auswahlschritt in der Anzeigeeinrichtung 1 eine Liste an gespeicherten Rezepten angezeigt werden. Der Bediener kann durch Anwahl, beispielsweise durch Berühren der Anzeigefläche der Anzeigeeinrichtung 1, zwei zu vergleichende Rezepte auswählen.

Gemäß einer Abwandlung des Ausführungsbeispiels sind die Rezepte in einem mit der Nahrungsmittelmaschine verbundenen externen Speicher, insbesondere einem Cloud-Speicher, gespeichert.

### Bezugszeichenliste

- 1: Anzeigeeinrichtung
- 2: erster Parameter
- 2.1: erster Parameterwert
- 2.2: zweite Parameterwert
- 3: zweiter Parameter
- 3.1: weiterer (identischer) Parameterwert
- 4: dritter Parameter
- 4.1: weiterer (identischer) Parameterwert
- 10: erste Rezept-Bezeichnung
- 20: zweite Rezept-Bezeichnung
- 21: Rezept-Angabe
- 30: Symbol
- 31: Symbol

## Patentansprüche

1. Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung (1) der Nahrungsmittelmaschine, wobei in einem Speicher ein erstes Rezept gespeichert ist, welches mehrere Parameter umfasst, denen jeweils ein erster Parameterwert zugewiesen ist und ein zweites Rezept gespeichert ist, welches mehrere Parameter umfasst, denen jeweils ein zweiter Parameterwert zugewiesen ist,
a. wobei - in einem einem Ermittlungsschritt vorhergehenden Auswahlschritt - das erste Rezept und das zweite Rezept durch einen Bediener der Nahrungsmittelmaschine aus einer vorgegebenen Menge an gespeicherten Rezepten ausgewählt wird,
b. wobei in dem Ermittlungsschritt ein Parameter ermittelt wird, der in dem ersten und dem zweiten Rezept enthalten ist und dem ein erster Parameterwert des ersten Rezepts und ein zweiter Parameterwert des zweiten Rezepts zugewiesen ist, welche sich voneinander unterscheiden, wobei in dem Ermittlungsschritt zur Ermittlung des in dem ersten und zweiten Rezept enthaltenen Parameters ein Vergleich von Parametern des ersten Rezepts und des zweiten Rezepts durchgeführt wird, wobei den Parametern des ersten und des zweiten Rezepts zugewiesene Attribute miteinander verglichen werden, wobei zur Ermittlung sich unterscheidender Parameterwerte ein Vergleich der Parameterwerte des in dem ersten und zweiten Rezept enthaltenen Parameters durch einen Vergleich von Binärdaten erfolgt,
c. wobei in einem ersten Anzeigeschritt mittels der Anzeigeeinrichtung (1) zu dem ermittelten Parameter gleichzeitig der erste und der zweite Parameterwert angezeigt wird.

2. Verfahren nach Anspruch 1, **dadurch gekennzeichnet, dass** zur Auswahl des ersten Rezepts und/oder des zweiten Rezepts ein Indikator durch eine Detektionseinrichtung erfasst wird und durch eine Auswahleinheit das erste und/oder zweite Rezept in Abhängigkeit von dem erfassten Indikator ermittelt wird.

3. Verfahren nach Anspruch 2, **dadurch gekennzeichnet, dass** der Indikator ein optisch erfassbarerer Indikator ist und die Detektionseinrichtung eine optische Detektionseinrichtung ist.

4. Verfahren nach einem der vorhergehenden Ansprüche, **dadurch gekennzeichnet, dass** das erste und das zweite Rezept in einem Speicher der Nahrungsmittelmaschine gespeichert sind.

5. Verfahren nach einem der Ansprüche 1 bis 3, **dadurch gekennzeichnet, dass** das erste und das zweite Rezept in einem mit der Nahrungsmittelmaschine verbundenen externen Speicher, insbesondere einem Cloud-Speicher, gespeichert sind.

6. Verfahren nach einem der vorhergehenden Ansprüche, **dadurch gekennzeichnet, dass** in dem ersten Anzeigeschritt mittels der Anzeigeeinrichtung (1) zusätzlich zu dem ersten und zweiten Parameterwert des ermittelten Parameters auch ein weiterer Parameterwert eines weiteren Parameters angezeigt wird, der in dem ersten und dem zweiten Rezept enthalten ist und dem gemäß dem ersten Rezept und dem zweiten Rezept ein identischer dritter Parameterwert zugewiesen ist.

7. Verfahren nach einem der Ansprüche 1 bis 5, **dadurch gekennzeichnet, dass** in einem zweiten Anzeigeschritt mittels der Anzeigeeinrichtung (1) zusätzlich zu dem ersten und zweiten Parameterwert des ermittelten Parameters auch ein weiterer Parameterwert eines weiteren Parameters angezeigt wird, der in dem ersten und dem zweiten Rezept enthalten ist und dem gemäß dem ersten Rezept und dem zweiten Rezept ein identischer dritter Parameterwert zugewiesen ist, wobei der weitere Parameterwert in dem ersten Anzeigeschritt nicht angezeigt wird und wobei durch eine Eingabe eines Bedieners zwischen dem ersten und dem zweiten Anzeigeschritt gewechselt wird, insbesondere hin- und her gewechselt wird.

8. Anzeigeeinrichtung (1) für eine Nahrungsmittelmaschine, insbesondere eine Nahrungsmittelverarbeitungsmaschine oder eine Nahrungsmittelverpackungsmaschine, die dazu eingerichtet ist,
a. eine Liste an gespeicherten Rezepten anzuzeigen, so dass ein Bediener der Nahrungsmittelmaschine - in einem einem Ermittlungsschritt vorhergehenden Auswahlschritt - ein erstes Rezept und ein zweites Rezept auswählen kann,
b. in dem Ermittlungsschritt einen Parameter zu ermitteln, der in einem ersten und einem zweiten Rezept enthalten ist und dem ein erster Parameterwert des ersten Rezepts und ein zweiter Parameterwert des zweiten Rezepts zugewiesen ist, welche sich voneinander unterscheiden, wobei in dem Ermittlungsschritt zur Ermittlung des in dem ersten und zweiten Rezept enthaltenen Parameters ein Vergleich von Parametern des ersten Rezepts und des zweiten Rezepts durchgeführt wird, wobei den Parametern des ersten und des zweiten Rezepts zugewiesene Attribute miteinander verglichen werden, wobei zur Ermittlung sich unterscheidender Parameterwerte ein Vergleich der Parameterwerte des in dem ersten und zweite Rezept enthaltenen Parameters durch einen Vergleich von Binärdaten erfolgt
c. in einem ersten Anzeigeschritt zu dem ermittelten Parameter gleichzeitig den ersten und den zweiten Parameterwert anzuzeigen.

9. Nahrungsmittelmaschine, insbesondere eine Nahrungsmittelverarbeitungsmaschine oder eine Nahrungsmittelverpackungsmaschine, mit einer Anzeigeeinrichtung (1) nach Anspruch 8.

10. Verfahren zur Darstellung von Parametern einer Nahrungsmittelmaschine, insbesondere einer Nahrungsmittelverarbeitungsmaschine oder einer Nahrungsmittelverpackungsmaschine, mittels einer Anzeigeeinrichtung (1) der Nahrungsmittelmaschine, wobei in einem Speicher ein erstes Rezept gespeichert ist, welches mehrere Parameter umfasst, denen jeweils ein erster Parameterwert zugewiesen ist und ein zweites Rezept gespeichert ist, welches mehrere Parameter umfasst, denen jeweils ein zweiter Parameterwert zugewiesen ist,
a. wobei - in einem einem Ermittlungsschritt vorhergehenden Auswahlschritt - das erste Rezept und das zweite Rezept durch einen Bediener der Nahrungsmittelmaschine aus einer vorgegebenen Menge an gespeicherten Rezepten ausgewählt wird,
b. wobei in einem Ermittlungsschritt ein Parameter ermittelt wird, der in dem zweiten Rezept enthalten ist und in dem ersten Rezept nicht enthalten ist, wobei in dem Ermittlungsschritt zur Ermittlung des in dem ersten und zweiten Rezept enthaltenen Parameters ein Vergleich von Parametern des ersten Rezepts und des zweiten Rezepts durchgeführt wird, wobei den Parametern des ersten und des zweiten Rezepts zugewiesene Attribute miteinander verglichen werden,
c. wobei in einem ersten Anzeigeschritt mittels der Anzeigeeinrichtung (1) der ermittelte Parameter und eine Angabe, insbesondere eine Bezeichnung, des zweiten Rezepts angezeigt wird.

11. Verfahren nach Anspruch 10, **dadurch gekennzeichnet, dass** das erste Rezept ein vorgegebenes Standard-Rezept ist und das zweite Rezept ein durch einen Bediener der Nahrungsmittelmaschine gegenüber dem Standardrezept verändertes Varianten-Rezept ist.

12. Verfahren nach einem der Ansprüche 10 bis 11, **dadurch gekennzeichnet, dass** das erste und das zweite Rezept in einem Speicher der Nahrungsmittelmaschine gespeichert sind.

13. Verfahren nach einem der Ansprüche 10 bis 12, **dadurch gekennzeichnet, dass** das erste und das zweite Rezept in einem mit der Nahrungsmittelmaschine verbundenen externen Speicher, insbesondere einem Cloud-Speicher, gespeichert sind.

14. Anzeigeeinrichtung (1) für eine Nahrungsmittelmaschine, insbesondere eine Nahrungsmittelverarbeitungsmaschine oder eine Nahrungsmittelverpackungsmaschine, die dazu eingerichtet ist,
a. - in einem einem Ermittlungsschritt vorhergehenden Auswahlschritt - das erste Rezept und das zweite Rezept durch einen Bediener der Nahrungsmittelmaschine aus einer vorgegebenen Menge an gespeicherten Rezepten auszuwählen,
b. in einem Ermittlungsschritt einen Parameter zu ermitteln, der in einem zweiten Rezept enthalten ist und in einem ersten Rezept nicht enthalten ist, wobei in dem Ermittlungsschritt zur Ermittlung des in dem ersten und zweiten Rezept enthaltenen Parameters ein Vergleich von Parametern des ersten Rezepts und des zweiten Rezepts durchgeführt wird, wobei den Parametern des ersten und des zweiten Rezepts zugewiesene Attribute miteinander verglichen werden; und
c. in einem ersten Anzeigeschritt den ermittelten Parameter und eine Angabe, insbesondere eine Bezeichnung, des zweiten Rezepts anzuzeigen.

15. Nahrungsmittelmaschine, insbesondere eine Nahrungsmittelverarbeitungsmaschine oder eine Nahrungsmittelverpackungsmaschine, mit einer Anzeigeeinrichtung (1) nach Anspruch 14.

## Claims

1. Method for displaying parameters of a food machine, in particular a food processing machine or a food packaging machine, by means of a display device (1) of the food machine, wherein a first recipe comprising a plurality of parameters, each of which is assigned a first parameter value, is stored in a memory, and a second recipe comprising a plurality of parameters, each of which is assigned a second parameter value, is stored in the memory,
a. wherein - in a selection step preceding a determination step - the first recipe and the second recipe are selected by an operator of the food machine from a predetermined set of stored recipes,
b. wherein, in the determination step, a parameter is determined which is contained in the first and second recipes and to which a first parameter value of the first recipe and a second parameter value of the second recipe are assigned, which differ from each other, wherein, in the determination step for determining the parameter contained in the first and second recipes, a comparison of parameters of the first recipe and the second recipe is performed, wherein attributes assigned to the parameters of the first and second recipes are compared with each other, wherein, in order to determine differing parameter values, a comparison of the parameter values of the parameter contained in the first and second recipes is performed by comparing binary data,
c. wherein, in a first display step, the first and second parameter values are displayed simultaneously for the determined parameter by means of the display device (1) .

2. Method according to claim 1, **characterized in that**, in order to select the first recipe and/or the second recipe, an indicator is detected by a detection device and the first and/or second recipe is determined by a selection unit depending on the detected indicator.

3. Method according to claim 2, **characterized in that** the indicator is an optically detectable indicator and the detection device is an optical detection device.

4. Method according to one of the preceding claims, **characterized in that** the first and second recipes are stored in a memory of the food machine.

5. Method according to one of claims 1 to 3, **characterized in that** the first and second recipes are stored in an external memory connected to the food machine, in particular a cloud memory.

6. Method according to one of the preceding claims, **characterized in that**, in the first display step, the display device (1) displays, in addition to the first and second parameter values of the determined parameter, a further parameter value of a further parameter which is contained in the first and second recipes and to which an identical third parameter value is assigned according to the first recipe and the second recipe.

7. Method according to one of claims 1 to 5, **characterized in that**, in a second display step, the display device (1) displays, in addition to the first and second parameter values of the determined parameter, a further parameter value of a further parameter which is contained in the first and second recipes and to which an identical third parameter value is assigned in accordance with the first recipe and the second recipe, wherein the further parameter value is not displayed in the first display step and wherein an input by an operator causes a change between the first and second display steps, in particular a change back and forth.

8. Display device (1) for a food machine, in particular a food processing machine or a food packaging machine, which is designed to
a. display a list of stored recipes so that an operator of the food machine can select a first recipe and a second recipe in a selection step preceding a determination step,
b. in the determination step, determining a parameter that is contained in a first and a second recipe and to which a first parameter value of the first recipe and a second parameter value of the second recipe are assigned, which differ from each other, wherein, in the determination step, a comparison of parameters of the first recipe and the second recipe is performed to determine the parameter contained in the first and second recipes, wherein attributes assigned to the parameters of the first and second recipes are compared with each other, wherein, to determine differing parameter values, a comparison of the parameter values of the parameter contained in the first and second recipes is performed by comparing binary data
c. in a first display step, simultaneously displaying the first and second parameter values for the determined parameter.

9. Food machine, in particular a food processing machine or a food packaging machine, with a display device (1) according to claim 8.

10. Method for displaying parameters of a food machine, in particular a food processing machine or a food packaging machine, by means of a display device (1) of the food machine, wherein a first recipe comprising a plurality of parameters, each of which is assigned a first parameter value, is stored in a memory, and a second recipe comprising a plurality of parameters, each of which is assigned a second parameter value, is stored in the memory,
a. wherein - in a selection step preceding a determination step - the first recipe and the second recipe are selected by an operator of the food machine from a predetermined number of stored recipes,
b. wherein, in a determination step, a parameter is determined which is contained in the second recipe and is not contained in the first recipe, wherein, in the determination step for determining the parameter contained in the first and second recipes, a comparison of parameters of the first recipe and the second recipe is performed, wherein attributes assigned to the parameters of the first and second recipes are compared with each other,
c. wherein, in a first display step, the determined parameter and an indication, in particular a designation, of the second recipe are displayed by means of the display device (1).

11. Method according to claim 10, **characterized in that** the first recipe is a predetermined standard recipe and the second recipe is a variant recipe modified by an operator of the food machine in relation to the standard recipe.

12. Method according to one of claims 10 to 11, **characterized in that** the first and second recipes are stored in a memory of the food machine.

13. Method according to one of claims 10 to 12, **characterized in that** the first and second recipes are stored in an external memory connected to the food machine, in particular a cloud memory.

14. Display device (1) for a food machine, in particular a food processing machine or a food packaging machine, which is designed to
a. in a determination step preceding a selection step - selecting the first recipe and the second recipe by an operator of the food machine from a predetermined number of stored recipes,
b. in a determination step, determining a parameter that is contained in a second recipe and is not contained in a first recipe, wherein in the determination step for determining the parameter contained in the first and second recipes, a comparison of parameters of the first recipe and the second recipe is performed, wherein attributes assigned to the parameters of the first and second recipes are compared with each other ; and
c. in a first display step, displaying the determined parameter and an indication, in particular a designation, of the second recipe.

15. Food machine, in particular a food processing machine or a food packaging machine, with a display device (1) according to claim 14.

## Revendications

1. Procédé pour représenter les paramètres d'une machine alimentaire, en particulier d'une machine de transformation alimentaire ou d'une machine d'emballage alimencoloniataire, à l'aide d'un dispositif d'affichage (1) de la machine alimentaire, dans lequel une première recette comprenant plusieurs paramètres auxquels est attribuée respectivement une première valeur de paramètre est enregistrée dans une mémoire, et une deuxième recette comprenant plusieurs paramètres auxquels est attribuée respectivement une deuxième valeur de paramètre est enregistrée,
a. dans lequel, dans une étape de sélection précédant une étape de détermination, la première recette et la deuxième recette sont sélectionnées par un opérateur de la machine alimentaire parmi un ensemble prédéfini de recettes enregistrées,
b. dans lequel, dans l'étape de détermination, un paramètre est déterminé qui est contenu dans la première et la deuxième recette et auquel sont attribuées une première valeur de paramètre de la première recette et une deuxième valeur de paramètre de la deuxième recette, qui diffèrent l'une de l'autre, dans lequel, dans l'étape de détermination, pour déterminer le paramètre contenu dans la première et la deuxième recette, une comparaison des paramètres de la première recette et de la deuxième recette est effectuée, les attributs attribués aux paramètres de la première et de la deuxième recette étant comparés entre eux, dans lequel, pour déterminer les valeurs de paramètres différentes, une comparaison des valeurs de paramètres du paramètre contenu dans la première et la deuxième recette est effectuée par une comparaison de données binaires,
c. dans lequel, dans une première étape d'affichage, les première et deuxième valeurs de paramètre sont affichées simultanément à l'aide du dispositif d'affichage (1) pour le paramètre déterminé.

2. Procédé selon la revendication 1, **caractérisé en ce que**, pour sélectionner la première recette et/ou la deuxième recette, un indicateur est détecté par un dispositif de détection et la première et/ou la deuxième recette est déterminée par une unité de sélection en fonction de l'indicateur détecté.

3. Procédé selon la revendication 2, **caractérisé en ce que** l'indicateur est un indicateur détectable optiquement et le dispositif de détection est un dispositif de détection optique.

4. Procédé selon l'une des revendications précédentes, **caractérisé en ce que** la première et la deuxième recette sont enregistrées dans une mémoire de la machine alimentaire.

5. Procédé selon l'une des revendications 1 à 3, **caractérisé en ce que** la première et la deuxième recette sont enregistrées dans une mémoire externe connectée à la machine alimentaire, en particulier une mémoire cloud.

6. Procédé selon l'une des revendications précédentes, **caractérisé en ce que**, dans la première étape d'affichage, le dispositif d'affichage (1) affiche, en plus des première et deuxième valeurs du paramètre déterminé, une autre valeur d'un autre paramètre qui est contenu dans la première et la deuxième recette et auquel une troisième valeur identique est attribuée conformément à la première recette et à la deuxième recette.

7. Procédé selon l'une des revendications 1 à 5, **caractérisé en ce que**, dans une deuxième étape d'affichage, le dispositif d'affichage (1) affiche, en plus des première et deuxième valeurs du paramètre déterminé, une autre valeur d'un autre paramètre qui est contenu dans la première et la deuxième recette et auquel une troisième valeur identique est attribuée conformément à la première recette et à la deuxième recette, la valeur de paramètre supplémentaire n'étant pas affichée lors de la première étape d'affichage et l'alternance entre la première et la deuxième étape d'affichage, en particulier l'alternance entre les deux, étant effectuée par une saisie d'un opérateur.

8. Dispositif d'affichage (1) pour une machine alimentaire, en particulier une machine de transformation alimentaire ou une machine d'emballage alimentaire, qui est conçu pour
a. afficher une liste de recettes enregistrées, de sorte qu'un opérateur de la machine alimentaire puisse sélectionner, dans une étape de sélection précédant une étape de détermination, une première recette et une deuxième recette,
b. dans l'étape de détermination, déterminer un paramètre qui est contenu dans une première et une deuxième recette et auquel sont attribuées une première valeur de paramètre de la première recette et une deuxième valeur de paramètre de la deuxième recette, qui diffèrent l'une de l'autre, dans lequel, dans l'étape de détermination, pour déterminer le paramètre contenu dans la première et la deuxième recette, on effectue une comparaison des paramètres de la première recette et de la deuxième recette, les attributs attribués aux paramètres de la première et de la deuxième recette étant comparés entre eux, et pour déterminer les valeurs de paramètre différentes, on effectue une comparaison des valeurs de paramètre contenues dans la première et la deuxième recette par une comparaison de données binaires
c. afficher simultanément les première et deuxième valeurs de paramètre pour le paramètre déterminé lors d'une première étape d'affichage.

9. Machine alimentaire, en particulier une machine de transformation alimentaire ou une machine d'emballage alimentaire, avec un dispositif d'affichage (1) selon la revendication 8.

10. Procédé pour afficher les paramètres d'une machine alimentaire, en particulier d'une machine de transformation alimentaire ou d'une machine d'emballage alimentaire, à l'aide d'un dispositif d'affichage (1) de la machine alimentaire, dans lequel une première recette comprenant plusieurs paramètres auxquels est attribuée respectivement une première valeur de paramètre est enregistrée dans une mémoire, et une deuxième recette comprenant plusieurs paramètres auxquels est attribuée respectivement une deuxième valeur de paramètre est enregistrée dans une mémoire,
a. dans lequel, dans une étape de sélection précédant une étape de détermination, la première recette et la deuxième recette sont sélectionnées par un opérateur de la machine alimentaire parmi un ensemble prédéfini de recettes enregistrées,
b. dans lequel, lors d'une étape de détermination, un paramètre contenu dans la deuxième recette et non contenu dans la première recette est déterminé, dans lequel, lors de l'étape de détermination visant à déterminer le paramètre contenu dans la première et la deuxième recette, une comparaison des paramètres de la première recette et de la deuxième recette est effectuée, dans lequel les attributs attribués aux paramètres de la première et de la deuxième recette sont comparés entre eux,
c. dans lequel, lors d'une première étape d'affichage, le paramètre déterminé et une indication, en particulier une désignation, de la deuxième recette sont affichés à l'aide du dispositif d'affichage (1).

11. Procédé selon la revendication 10, **caractérisé en ce que** la première recette est une recette standard prédéfinie et la deuxième recette est une variante de la recette standard modifiée par un utilisateur de la machine alimentaire.

12. Procédé selon l'une des revendications 10 à 11, **caractérisé en ce que** la première et la deuxième recette sont enregistrées dans une mémoire de la machine alimentaire.

13. Procédé selon l'une des revendications 10 à 12, **caractérisé en ce que** la première et la deuxième recette sont enregistrées dans une mémoire externe connectée à la machine alimentaire, en particulier une mémoire cloud.

14. Dispositif d'affichage (1) pour un appareil alimentaire, en particulier un appareil de transformation alimentaire ou un appareil d'emballage alimentaire, qui est conçu pour
a. dans une étape de détermination précédant l'étape de sélection, sélectionner la première recette et la deuxième recette par un opérateur de la machine alimentaire à partir d'une quantité prédéfinie de recettes enregistrées,
b. dans une étape de détermination, déterminer un paramètre qui est contenu dans une deuxième recette et qui n'est pas contenu dans une première recette, dans lequel, dans l'étape de détermination pour déterminer le paramètre contenu dans la première et la deuxième recette, une comparaison des paramètres de la première recette et de la deuxième recette est effectuée, les attributs attribués aux paramètres de la première et de la deuxième recette étant comparés entre eux; et
c. dans une première étape d'affichage, afficher le paramètre déterminé et une indication, en particulier une désignation, de la deuxième recette.

15. Machine alimentaire, en particulier machine de transformation alimentaire ou machine d'emballage alimentaire, avec un dispositif d'affichage (1) selon la revendication 14.
